(19) Europäisches Patentamt
European Patent Office
Office européen des brevets

(11) Veröffentlichungsnummer: **0 377 170 B1**

(12) **EUROPÄISCHE PATENTSCHRIFT**

(45) Veröffentlichungstag der Patentschrift: **22.03.95**

(51) Int. Cl.[6]: **B02C 19/06**, B29B 13/10, //B29K71/00

(21) Anmeldenummer: **89123615.0**

(22) Anmeldetag: **21.12.89**

(54) **Verfahren zur Herstellung feinkörniges Polyetherketonpulvers und dessen Verwendung.**

(30) Priorität: **31.12.88 DE 3844457**

(43) Veröffentlichungstag der Anmeldung:
**11.07.90 Patentblatt 90/28**

(45) Bekanntmachung des Hinweises auf die Patenterteilung:
**22.03.95 Patentblatt 95/12**

(84) Benannte Vertragsstaaten:
**AT CH DE FR GB IT LI**

(56) Entgegenhaltungen:
**EP-A- 0 139 279**
**EP-A- 0 362 525**

**PLASTICS ENGINEERING, Band 44, Nr. 99, September 1988, Seite 63; "Pulverizing PEEK without cryogenics"**

**SOVIET INVENTIONS ILLUSTRATED, Woche 8431, 12. September 1984, Sekfion J/M,Klasse J02/M22, Nr. 84-194530/31, Derwent Publications Ltd, London, GB; &SU-A-1060 199 (UKR SPEC. STEELFERR) 15-12-1983**

**ANTEC'88, CONFERENCE PROCEEDINGS OF THE SOCIETY OF PLASTICS ENGINEERS, Atlanta,18-21. April 1988, Seiten 555-558; J. REILLY et al.: "Powder characterization and compaction of polyether-etherketone (PEEK)"**

(73) Patentinhaber: **HOECHST AKTIENGESELLSCHAFT**

**D-65926 Frankfurt (DE)**

(72) Erfinder: **Lücke, Andreas, Dr.**
**Ober dem Mühlweg 4**
**D-6251 Waldbrunn 5 (DE)**
Erfinder: **Steidl, Dieter**
**Ulmenstrasse 8**
**D-6238 Hofheim am Taunus (DE)**

EP 0 377 170 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Herstellung eines feinkörnigen Polyetherketons in einer Fließbett-Gegenstrahlmühle, und die Verwendung des Pulvers insbesondere zur Herstellung von Oberflächenbeschichtungen.

Polyetherketone sind Polymere, die durch nukleophile oder elektrophile Kondensation erhalten werden. Sie sind in außerordentlich vielen Variationen ausführlich beschrieben sowohl im Hinblick auf ihren Aufbau, ihre Herstellung als auch ihre Eigenschaften und Verwendungsmöglichkeiten. Die Polyetherketone sind insbesondere ihres herausragenden Eigenschaftsprofils wegen vom Fachmann hoch geschätzt. Sie sind hochtemperaturbeständig, haben sehr gute mechanische Eigenschaften und sind außerordentlich beständig gegenüber chemischen und Umwelteinflüssen. Sie besitzen aber den Nachteil, daß es schwierig ist, sie als fein gekörntes Pulver zu erhalten. Es ist daher auch nicht möglich, rißfreie, gleichmäßige und insbesondere glatte Beschichtungen, beispielsweise Metalloberflächenbeschichtungen, durch Flammbeschichtung zu erhalten. Die bekannten Polyetherketonpulver oder Körner sind aber auch für andere Verfahren und Zwecke wie z. B. elektrostatische Sprühbeschichtung, Wirbelsintern, Ramextrusion, zur Herstellung von gepreßten Composites u.s.w. oft nicht fein genug. Teilweise sind die bekannten Pulver auch nadelförmig und neigen deshalb zum Verfilzen.

Kürzlich wurde ein Verfahren zum Pulverisieren von PEEK bekannt, das die Herstellung von Pulvern mit 97 %igem Anteil von Korngrößen unter 20 µm erlauben soll ("Plastics Engineering", 44 (1988) Heft 9, S. 63). Die EP-A-0 139 279 zeigt ein Mahlverfahren mit den Merkmalen des Oberbegriffs des Anspruchs 1, jedoch wurde hier die Anwendung dieses Verfahrens auf grobkörnigem PEK nicht offenbart.

Im Handel erhältliche Polyetherketone ®VICTREX PEEK 150 und VICTREX PEEK 450 PF weisen Korngrößen von ca. 100 µm auf. Die Größe des Korn und die relativ breite Korngrößenverteilung dieser Produkte sind jedoch nachteilig. Daher werden bei der Pulverbeschichtung von Metallen oder bei Sinterprozessen keine zufriedenstellenden Ergebnisse erzielt.

Die Zerkleinerung von Metallpulvern mit einer Jet-Mühle in Gegenwart von flüssiger Luft oder Stickstoff ist auch bekannt (SU-A 1 060 199 = Derwent 84-194530/31). Hierbei werden gröbere Metallteilchen gegen einen Prallteller geschleudert, auf diese Weise zerkleinert und das Grobgut vom Feingut getrennt. Nachteilig ist daran, daß das Mahlgas zur Verhinderung der Oxidation der Metallteilchen mit Stickstoff angereichert werden muß, was aber zu einem Enthalpie-Verlust des Mahlgases führt.

Die EP-A-0 362 525, die als Veröffentlichung gemäß Artikel 54(3) EPÜ zu behandeln ist, beschreibt ein Verfahren und Vorrichtung zum Kaltmahlen. Beispielhaft werden darin hochmolekulares Polyethylen und Polyamid als Mahlgut angeführt. Polyetherketonmaterial, das aufgrund seiner physikalischen Eigenschaften schwieriger zu verarbeiten ist, wird darin nicht erwähnt.

Aufgabe der Erfindung ist es, die erwähnten Nachteile zu überwinden und ein fein gekörntes Polyetherketonpulver mit erhöhter Spherizität und ein Verfahren zur dessen Herstellung zur Verfügung zu stellen.

Eine weitere Aufgabe besteht darin zu erreichen, daß das gekörnte Polyetherketonpulver weitgehend frei von Abrieb aus der Mahlvorrichtung ist. Dies ist besonders wichtig für eine einwandfreie Oberflächenbeschaffenheit der Beschichtungen.

Das nach dem Verfahren gemäß der Erfindung erhaltene Pulver ist ein feinkörniges Polyetherketonpulver, das eine mittlere Korngröße ($d_{50}$-Wert) von kleiner oder gleich 40 µm, bevorzugt kleiner oder gleich 30 µm, insbesondere kleiner oder gleich 20 µm aufweist. Weitere Kenngrößen, die für die Charakterisierung des Pulvers wichtig sind, sind der $d_{90}$-Wert, der kleiner oder gleich 70 µm, vorzugsweise kleiner oder gleich 50 µm ist und der $d_{10}$-Wert, der kleiner oder gleich 15 µm, vorzugsweise kleiner oder gleich 10 µm ist. Hieraus ergibt sich die Verteilungsbreite, die sich aus der Differenz von $d_{90}$ minus $d_{10}$ errechnen läßt. Sie weist Werte von kleiner oder gleich 55 µm, vorzugsweise kleiner oder gleich 40 µm, insbesondere kleiner oder gleich 20 µm auf. Die Verteilungsbreite charakterisiert die Breite der Kornverteilung in den Pulvern; je kleiner der Wert ist, desto besser ist die Verarbeitbarkeit und somit die Struktur des erhaltenen Formstücks.

Der Begriff Polyetherketone schließt alle Polymere ein, die wiederkehrende Einheiten

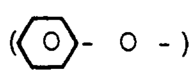 und 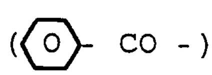

besitzen. Diese Einheiten sind auf verschiedene Art untereinander, im allgemeinen in p-Stellung, verknüpft. Gemäß dem allgemeinen Sprachgebrauch bezeichnet man die erste Einheit als "E" (-Ether) und die zweite Einheit als "K" (-Keton). So wird das früher erwähnte Polyetherketon als PEEK ausgewiesen. Bevorzugte Polyetherketone gemäß der Erfindung sind solche vom Typ PEK und PEKK, besonders bevorzugt ist

PEEKK. Diese Polymere können aber auch andere, sich wiederholende Einheiten als Copolymerbausteine enthalten, ausgewählt aus der Gruppe EKEEK, EEK, EEKK, EKK; in der Regel aber in Mengen von nicht mehr als 40%, bevorzugt nicht mehr als 20% und besonders bevorzugt nicht mehr als 5 Mol-%.

Im Hinblick auf die vielseitige Einsetzbarkeit der Polyetherketonpulver entsprechend der vorliegenden Erfindung können die Pulver einen Schmelzflußindex MFI von 400 bis 1,0 g, gemessen bei 400 °C in 10 Minuten (ASTM D 1238) haben. Ihr Schmelzpunkt liegt im allgemeinen über 250 °C, vorzugsweise über 300 °C und insbesondere über 350 °C und ihr Erweichungspunkt im allgemeinen über 130 °C.

Der Gegenstand der Erfindung ist ein Verfahren zur Herstellung der feinkörnigen Polyetherketonpulver, bei dem grobkörniges Polyetherketon in einer Fließbett-Gegenstrahlmühle mit einer von Gasstrahlen beaufschlagten Mahlkammer (2), einer Mahlgutaufgabeeinrichtung, einem Sichter (5) zur Trennung von Grob- (11) und Feingut (10) und einem Sumpf (3) unterhalb der Mahlkammer für zudosiertes Mahlgut und vom Sichter zurückströmendes Grobgut, kalt gemahlen wird, wobei das Mahlgut und das vom Sichter zurückströmende Grobgut durch ein kryogenes Kältemittel in der Mahlkammer gekühlt wird und die Mahlung nahezu verschleißfrei erfolgt.

Strahlmühlen sind seit langem bekannte Zerkleinerungmachinen, in denen die zu zerkleinernden Teilchen durch Gasströme beschleunigt und durch Zusammenprall zerkleinert werden. Es gibt eine Anzahl unterschiedlicher Strahlmühlenkonstruktionen. Sie unterscheiden sich durch die Art der Gasführung, durch die Art des Aufprallens der Teilchen gegeneinander oder auf eine Prallfläche und dadurch, ob die zu zerkleinernden Teilchen im Gasstrahl mitgeführt werden oder ob der Gasstrahl auf die Teilchen auftrifft und sie mitreißt. Als Mahlgas wird gewöhnlich Luft oder Heißdampf verwendet.

Bei der Fließbett-Gegenstrahlmühle treffen freiexpandierende Gasstrahlen in einer Mahlkammer aufeinander, in welcher sich das Mahlgut in Form eines Fließbettes befindet. Die Vermahlung erfolgt hierbei praktisch ausschließlich durch Aufeinanderprall der Mahlgutteilchen gegeneinander, die Vermahlung ist somit nahezu verschleißfrei. Der Fließbett-Gegenstrahlmühle ist ein Sichter zugeordnet, in welchem das gewonnene Feingut vom noch nicht genügend zerkleinerten Grobgut abgetrennt wird. Das Grobgut wird in die Mahlkammer zurückgeführt.

Viele Stoffe, beispielsweise Kunststoffe, lassen sich wegen ihrer Zähigkeit nur schlecht oder überhaupt nicht auf feine Korngrößen vermahlen. Durch Kältezufuhr und die dadurch bewirkte Versprödung der Werkstoffe lassen sich die Mahleigenschaften derartig zäher Werkstoffe verbessern. Bei Strahlmühlen kühlt man deshalb den Treibgasstrom ab, wie es beispielsweise in der DE-OS 21 33 019 beschrieben ist. Die Abkühlung des Treibgasstromes ermöglicht es, Materialien zu mahlen, die unter normalen Bedingungen in Strahlmühlen nicht mahlbar wären. Trotz intensiver Abkühlung, beispielsweise mit flüssigem Stickstoff, und trotz der Eigenabkühlung des Treibgasstromes infolge seiner Expansion, läßt die erreichbare Verbesserung der Mahlbarkeit jedoch sehr zu wünschen übrig. Zwar lassen sich feine Korngrößen erreichen, jedoch nur mit einem überaus hohen Zeit- und Energieaufwand.

Das Verfahren gemäß der Erfindung löst daher die Aufgabe, bei geringem Bedarf an Energie und Kältemittel die Feinstzermahlung von Polyetherketonen auf bisher praktisch nicht erreichbare feinste Korngrößen bei wesentlicher Durchsatzsteigerung zu ermöglichen. Hierbei wird nicht der Treibgasstrom, sondern das umlaufende Grobgut mit einem kryogenen Kältemittel gekühlt. Die Maßnahme gemäß der Erfindung bewirkt eine sprunghafte Verbesserung der Mahlergebnisse, wie aus den in der Tabelle aufgeführten Ergebnissen ersichtlich ist.

Durch das Verfahren gemäß der Erfindung läßt sich auf Fließbett-Gegenstrahlmühlen eine beträchtliche Durchsatzsteigerung gegenüber der Mahlung unter Normalbedingungen erreichen. Mit Polyetherketonen lassen sich Teilchen höchster Feinheit mit entsprechender Oberflächenvergrößerung und glatter Oberflächenstruktur herstellen. Das Endprodukt wird gut rieselfähig und besitzt ein hohes Schütt- und Rüttgewicht.

Als Kältemittel kommen in erster Linie verflüssigte Gase, insbesondere Stickstoff, infrage, aber auch Kohlendioxid. Diese können im einfachsten und in vielen Fällen zweckmäßigsten Fall direkt in den Sumpf der Mühle eingespeist werden. Selbstverständlich ist auch eine indirekte Kühlung des Grobgutes möglich. Eine indirekte Kühlung kann auch durch andere Kältemittel, beispielsweise Solebäder, erfolgen.

Einige Ausführungsbeispiele der Erfindung sollen anhand der beigefügten Zeichnungen erläutert werden:

Es zeigen:

| | |
|---|---|
| Fig.1 | eine Fließbett-Gegenstrahlmühle in schematischer Form, |
| Fig.2 | die Kühlung des Sumpfes der Fließbett-Gegenstrahlmühle von Fig.1, |
| Fig.3. | eine Mischform aus direkter und indirekter Kühlung des Sumpfes |
| Fig.4 | eine Ausführungsform ähnlich Fig.3, jedoch mit ausschließlich direkter Kühlung |
| Fig.5 | eine indirekte Kühlung des zurückströmenden Grobgutes außerhalb des Sumpfes der Mühle. |

In der nachfolgenden Beschreibung sind für gleiche Teile in allen Figuren die gleichen Bezugszeichen verwendet worden.

Fig.1 zeigt eine Fließbett-Gegenstrahlmühle in schematischer Form. Die Mühle besteht aus einem Gehäuse 1, welches die Mahlkammer 2 und den Sumpf 3 umfaßt. Das Treibgas tritt durch die Düsen 4 in die Mahlkammer 2 ein. An das Gehäuse 1 schließt sich der Sichter 5 an. Das zu mahlende Grobgut befindet sich in Form eines Fließbettes 6 in der Mahlkammer. Das Mahlgut wird durch die Schleuse 7 zudosiert. Das im Sichter 5 abgetrennte Feingut 10 wird durch den Feingutaustritt 8 abgezogen, wie durch den Pfeil 9 angegeben, und der Filteranlage 15 zugeführt. Diese besitzt einen Stutzen 16 für das Abgas und eine Entnahmeschleuse 17 für das gewonnene Feingut 10. Das Grobgut 11 strömt vom Sichter 5 zurück in die Mahlkammer 2. Das Treibgas, mit dem die Düsen 4 beaufschlagt werden, wird durch die Zufuhrleitung 14 herbeigeführt.

Erfindungsgemäß wird das sich im Sumpf 3 der Mühle befindende Grobgut durch flüssigen Stickstoff abgekühlt. Dieser wird durch die Leitung 12 und den porösen Eintragkörper 13 eingeleitet. Poröse Eintragkörper eignen sich besonders für kleine Mühlen. Für Mühlen mit größeren Durchmessern sind andere Eintragsysteme, beispielsweise Düsenplatten, vorzuziehen, um den Stickstoff möglichst feinzerteilt eintragen zu können. Die Stickstoffzufuhr durch die Leitung 12 und den porösen Eintragkörper 13 erfolgt in Abhängigkeit von der Temperaturregelung 18. Die Mahlgutaufgabe durch die Schleuse 7 kann auch direkt in den Sumpf 3 erfolgen. Die Feinfraktion des Feingutes 10 wird durch die Drehzahl des Sichters 5 bestimmt. Das vom Sichter 5 zurückströmende Grobgut 11 bildet zusammen mit dem aus der Schleuse 7 eintretenden Mahlgut das Fließbett 6. Der durch den porösen Eintragkörper 13 eintretende flüssige Stickstoff verdampft und kühlt den Sumpf der Mühle, d.h. das vom Sichter 5 zurückströmende Grobgut 11 und gegebenenfalls frischaufgegebenes Mahlgut. Der verdampfte kalte Stickstoff zieht nach oben durch das Gut ab und tritt in die Mahlzone ein. Kaltgas, Grobgut und Mahlgut bilden unterhalb der Mahlkammer 2 im Sumpf 3 eine erste Fließbettzone.

Fig. 2 zeigt in schematischer Form den unteren Teil der Fließbett-Gegenstrahlmühle von Fig. 1, jedoch mit der Schleuse 7 für das Mahlgut direkt am Sumpf 3 angeordnet. Die Pfeile 19 verdeutlichen das nach oben zum Sichter hin abziehende Gemisch aus Kaltgas, Treibgas, Grobgut und Feingut.

Fig. 3 zeigt eine Variante mit indirektem und direkten Wärmeaustausch zwischen zugeführtem Stickstoff und Mahlgut.

Die Zufuhr des flüssigen Stickstoffes erfolgt durch die Leitungen 20 und 21. Der durch die Leitung 21 eintretende flüssige Stickstoff gelangt in ein an den Stirnflächen geschlossenes doppelwandiges Rohr 22. Dieses doppelwandige Rohr 22 besitzt nach innen gerichtet Austrittsöffnungen 23. Der gesamte untere Teil des Mühlengehäuses ist ebenfalls als doppelwandige Kammer 24 ausgebildet. In sie mündet die Leitung 20. Die Kammer 24 besitzt im Sumpf 3 angeordnete Austrittsöffnungen 25 für den durch die Leitung 20 zugeführten Stickstoff. Das vom Sichter zurückströmende Grobgut 11 wird daher zunächst in dem Bereich zwischen dem doppelwandigen Rohr 22 und der Kammer 24 indirekt gekühlt. Anschließend erfolgt eine direkte Kühlung durch den aus den Austrittsöffnungen 23 und 25 austretenden Stickstoff.

Je nach Betriebsweise kann dieser noch flüssig oder bereits gasförmig sein.

Fig. 4 zeigt eine Ausführungsform ähnlich Fig. 2, jedoch mit einem verlängerten Sumpf 3. Durch eine rohrförmige Schürze 26 wird hierbei dem Grobgut 11 und dem Kaltgas eine bestimmte Strömungsform aufgeprägt. Die Schürze 26 trennt die Mahlkammer in einen zentralen Schacht 37, wo der Mahlvorgang stattfindet, und in einen ringförmigen Schacht 38 für das zurückströmende Grobgut. Die Zufuhr des flüssigen Stickstoffes erfolgt an zwei Stellen, nämlich durch die Leitung 12a direkt in den Sumpf 3 und durch die Leitung 12b in ein Einsprühsystem 39 im ringförmigen Schacht 38. Der durch die Leitung 12b eingeleitete Stickstoff kühlt demnach unmittelbar das vom Sichter zurückströmende Grobgut.

Das Grobgut aus dem Filter 28 und gegebenenfalls Mahlgut aus der Leitung 30 treten hierbei in einen Wärmeaustauscher 35 ein. Vorn dort gelangen sie, indirekt gekühlt, in den Sumpf 3. Die Kühlung erfolgt duch flüssigen Stickstoff, der durch die Leitung 34 in den Wärmeaustauscher 35 eingeleitet wird. Der verdampfte gasförmige Stickstoff gelangt dann durch die Leitung 36 als Kaltgas ebenfalls in den Sumpf 3, wo eine anschließende weitere direkte Kühlung stattfindet.

Es bestehen auch zahlreiche weitere Möglichkeiten für die Abkühlung des vom Sichter zurückströmende Grobgutes durch ein Kältemittel. Beispielsweise können auch mehrere Mahlzonen mit Sumpf in Form einer Kaskade hintereinander geschaltet werden. Hierbei wird das aus der Mahlzone austretende Gemisch aus Feingut und Grobgut in einem Filter vom Abgas abgetrennt und der nächsten Mahlzone zugeführt. Der unter jeder Mahlzone befindliche Sumpf wird hierbei gemäß der Erfindung gekühlt. Erst der letzten Stufe wird ein Sichter zugeordnet.

Die feinkörnigen Polyetherketone gemäß der Erfindung können vorteilhaft zur Beschichtung von Oberflächen beispielsweise durch Flammbeschichtung, elektrostatische Sprühbeschichtung, Wirbelsintern

oder Ramextrusion, verwendet werden. Darüberhinaus eignen sie sich hervorragend für Sinterprozesse, beispielsweise zur Herstellung von gepreßten Composites.

Beispiele:

Als Ausgangspunkt wurde für die Versuche ein Polyetheretherketonketon (PEEKK) mit einem Schmelzflußindex MPI von 15 g (400° C/10 min) verwendet. Die Korngrößen dieses Ausgangsmaterials sind in der Tabelle aufgeführt. Als Vergleich dienten ferner zwei handelsübliche Polyetherketone der Fa. ICI unter der Bezeichnung ®Victrex PEEK 150 P und Victrex PEEK 450 PF (V1 bzw. V4 und V5). Die Beispiele 2 und 3 stellen erfindungsgemäße Beispiele dar.

Die Korngrößenanalyse wurde in einer Suspension aus Feststoff, Wasser und Netzmittel auf Basis von Nonylphenolpolyglykolether mit einem handelsüblichen Lasergranolometer (Hersteller: Fa Cilas, 91460 Marcousse, Frankreich) ermittelt. Als repräsentative Werte wurden die $d_{10}$-, $d_{50}$- und $d_{90}$-Werte ausgewählt. Zum Beispiel bedeutet der $d_{-10}$-Wert von 6,4 µm in Beispiel 2, daß 10 % des Endproduktes eine Teilchengröße unter 6,4 µm aufweisen. Beispiele 2 und 3 unterscheiden sich in Bezug auf die Sichterdrehzahl und Produktdurchsatzmenge.

| Beispiele | V1 | 2 | 3 | V4 | V5 |
|---|---|---|---|---|---|
| Produkt | PEEKK* | PEEKK | PEEKK | VICTREX 150P | VICTREX 450 PF |
| Düsen-Anzahl | - | 3 | 3 | - | - |
| Düsen-Winkel (°) | - | 120 | 120 | - | - |
| -Durchmesser (mm) | - | 8 | 8 | - | - |
| Sichterdrehzahl ($min^{-1}$) | - | 4 500 | 3 000 | - | - |
| Durchsatzmenge-Gas ($m^3/h$) | - | 813 | 813 | - | - |
| Durchsatzmenge-Produkt (kg/h) | - | 5 | 7,5 | - | - |
| Mahldruck (bar) | - | 6 | 6 | - | - |
| Laufzeit (min) | - | 120 | 120 | - | - |
| Sumpfkühlung (° C) | - | - 40 | - 40 | - | - |
| Korngrößen: | | | | | |
| $d_{10}$ (μm) | 35 | 6,4 | 11,7 | 32 | 20,2 |
| $d_{50}$ (μm) | 350 | 16,1 | 24,7 | 100 | 46,8 |
| $d_{90}$ (μm) | 1 200 | 31,2 | 42,5 | 160 | 82,6 |
| Verteilungsbreite: | | | | | |
| $d_{90}$ - $d_{10}$ (μm) | 1 165 | 24,8 | 30,8 | 128 | 62,4 |

*Ausgangsmaterial

Aus der Tabelle geht hervor, daß die Verteilungsbreite sinkt, wenn die Sichterdrehzahl erhöht und der Produktdurchsatz sinkt, d. h. in Beispiel 2 wird ein Produkt mit einer gleichmäßigen Korngrößenbeschaffenheit erhalten. Ein weiterer Vorteil dieser Polyetherketonpulver ist die weitgehend sphäroidale Form der PEK-Partikel. Die erhöhte Spherizität der Partikel bewirkt eine verbesserte Rieselfähigkeit gegenüber den bisher bekannten Verfahren. Die Rieselfähigkeit ist wichtig für den gleichmäßigen Auftrag in der Anwendung, z. B. bei der Metallbeschichtung. Durch die Agglomerationsneigung der bekannten Pulver können sich bei den

bisher bekannten Mahlverfahren ungleichmäßige Oberflächen ausbilden. Eine gleichmäßige Oberfläche ist aber Voraussetzung für die Güte der Oberfläche. Bisher konnten nur rissige Oberflächen erhalten werden, während man mit dem Polyetherketonpulvern gemäß der Erfindung glatte Oberflächen erhält.

## Patentansprüche

1. Verfahren zum Kaltmahlen von grobkörnigem Polyetherketon in einer Fließbett-Gegenstrahlmühle mit einer von Gasstrahlen beaufschlagten Mahlkammer (2), einer Mahlgutaufgabeeinrichtung, einem Sichter (5) zur Trennung von Grob-(11) und Feingut (10) und einem Sumpf (3) unterhalb der Mahlkammer für zudosiertes Mahlgut und vom Sichter zurückströmendes Grobgut, dadurch gekennzeichnet, daß das Mahlgut und das vom Sichter zurückströmende Grobgut durch ein kryogenes Kältemittel in der Mahlkammer gekühlt wird und die Mahlung nahezu verschleißfrei erfolgt.

2. Verfahren nach Anspruch 1, dadurch gekennzeichnet, daß das Polyetherketon ausgewählt ist aus der Gruppe PEK, PEEK, PEEKK, PEKK oder einer Mischung daraus.

3. Verfahren nach Anspruch 2, dadurch gekennzeichnet, daß die Polyetherketone Co-Kondensate sind, die bis zu 40 Mol-%, vorzugsweise bis zu 20 mol-% und insbesondere bis zu 5 Mol-% andere Einheiten, ausgewählt aus der Gruppe EKEEK, EEK, EKK enthalten.

4. Verfahren nach einem oder mehreren der Ansprüche 1 bis 3, dadurch gekennzeichnet, daß das eingesetzte Polyetherketon einen Schmelzflußindex von 400 bis 1,0 g (400 ° C / 10 min) aufweist.

5. Verfahren nach einem oder mehreren der Ansprüche 1 bis 4, dadurch gekennzeichnet, daß das kryogene Kältemittel in feinzerteilter Form mit dem Grobgut in Berührung gebracht wird.

6. Verfahren nach einem oder mehreren der Ansprüche 1 bis 6, dadurch gekennzeichnet, daß das kryogene Kältemittel in den Sumpf eingetragen wird.

7. Verfahren nach einem oder mehreren der Ansprüche 1 bis 7, dadurch gekennzeichnet, daß das Grobgut durch ein kryogenes Kältemittel direkt gekühlt wird.

8. Verfahren nach einem oder mehreren der Ansprüche 1 bis 7, dadurch gekennzeichnet, daß als kryogenes Kältemittel flüssiger Stickstoff oder Kohlendioxid verwendet wird.

9. Verfahren nach einem oder mehreren der Ansprüche 1 bis 8, dadurch gekennzeichnet, daß Polyetherketon zu einem Pulver vermahlen wird, bei dem die Korngröße einen $d_{50}$-Wert von kleiner oder gleich 40 $\mu$m aufweist und die Kornverteilungsbreite kleiner oder gleich 55 $\mu$m ist.

10. Verwendung der nach dem Verfahren gemäß einem oder mehreren der Ansprüche 1 bis 9 hergestellten Pulver zur Herstellung von Oberflächenbeschichtungen.

11. Verwendung der nach dem Verfahren gemäß einem oder mehreren der Ansprüche 1 bis 9 hergestellten Pulver zur Herstellung von Composites.

## Claims

1. Process for the low-temperature comminution of coarse-particle polyether ketone in a fluidized-bed counter-jet pulverizer with a pulverizing chamber (2) into which gas jets are directed, a millbase feed device, a separator (5) for separating coarse material (11) from fines (10) and a sump (3) below the pulverizing chamber for added millbase and for coarse material returning from the separator, characterized by the fact that the millbase and the coarse material returning from the separator are cooled in the pulverizing chamber by a cryogenic refrigerant and the pulverization takes place almost free of abrasive wear

2. Process in accordance with Claim 1, characterized by the fact that the polyether ketone is selected from the group PEK, PEEK, PEEKK, PEKK or a mixture of these.

3. Process in accordance with Claim 2, characterized by the fact that the polyether ketones are co-condensates containing up to 40 mol %, preferably up to 20 mol % and especially up to 5 mol % of other units selected from the group EKEEK, EEK, EKK.

4. Process in accordance with one of more of Claims 1 to 3, characterized by the fact that the polyether ketone used displays a melt flow index of 400 to 1.0 g (400 °C/10 min).

5. Process in accordance with one or more of Claims 1 to 4, characterized by the fact that the cryogenic refrigerant is brought into contact in finely divided form with the coarse material.

6. Process in accordance with one or more of Claims 1 to 5, characterized by the fact that the cryogenic refrigerant is introduced into the sump.

7. Process in accordance with one or more of Claims 1 to 6, characterized by the fact that the coarse material is cooled direct by a cryogenic refrigerant.

8. Process in accordance with one or more of Claims 1 to 7, characterized by the fact that liquid nitrogen or carbon dioxide is used as the cryogenic refrigerant.

9. Process in accordance with one or more of Claims 1 to 8, characterized by the fact that polyether ketone is comminuted to a powder in which the particle size displays a $d_{50}$ value of 40 µm or less and the particle size distribution is 55 µm or less.

10. Use of the powders produced by the process in accordance with one or more of Claims 1 to 9 to produce surface coatings.

11. Use of the powders produced by the process in accordance with one or more of Claims 1 to 9 to produce composites.

## Revendications

1. Procédé de broyage à froid de polyéthercétone à gros grains dans un broyeur à lit fluidisé à contre-courant avec une chambre de broyage (2) exposée à des jets de gaz, un dispositif d'alimentation du produit à broyer, un séparateur à air (5) pour séparer le produit fin (10) du produit grossier (11), et un carter inférieur (3) en-dessous de la chambre de broyage pour le produit à broyer alimenté de façon dosée et le produit grossier renvoyé par le séparateur à air, **caractérisé** en ce que le produit à broyer et le produit grossier renvoyé par le séparateur à air sont refroidis par un réfrigérant cryogène dans la chambre de broyage, et le broyage s'effectue quasiment sans usure.

2. Procédé selon la revendication 1, **caractérisé** en ce que la polyéthercétone est sélectionnée parmi les polyéthercétones, les polyétheréthercétones, les polyétherétherdicétones, les polyétherdicétones ou un mélange de ces substances.

3. Procédé selon la revendication 2, **caractérisé** en ce que les polyéthercétones sont des condensats de carbonyles qui contiennent jusqu'à 40 %, de préférence jusqu'à 20 % et notamment jusqu'à 5 % (pourcentages moléculaires) d'autres groupes, sélectionnés parmi les éthercétone-étheréthercétones, les étheréthercétones et les étherdicétones.

4. Procédé selon une ou plusieurs des revendications 1 à 3, **caractérisé** en ce que la polyéthercétone utilisée présente un indice de fusion complète de 400 à 1,0 g (400 °C / 10 minutes).

5. Procédé selon une ou plusieurs des revendications 1 à 4, **caractérisé** en ce que le réfrigérant cryogène est amené en contact avec le produit grossier en dispersion fine.

6. Procédé selon une ou plusieurs des revendications 1 à 5, **caractérisé** en ce que le réfrigérant cryogène est introduit dans le carter inférieur.

7. Procédé selon une ou plusieurs des revendications 1 à 6, **caractérisé** en ce que le produit grossier est directement refroidi par un réfrigérant cryogène.

8. Procédé selon une ou plusieurs des revendications 1 à 7, **caractérisé** en ce qu'on utilise comme réfrigérant cryogène du dioxyde de carbone ou de l'azote liquide.

9. Procédé selon une ou plusieurs des revendications 1 à 8, **caractérisé** en ce qu'on broie la polyéthercétone en poudre dont la grosseur de grain présente une valeur $d_{50}$ inférieure ou égale à 40 µm et dont la largeur de distribution granulométrique est inférieure ou égale à 55 µm.

10. Utilisation de la poudre fabriquée d'après le procédé selon une ou plusieurs des revendications 1 à 9 pour la réalisation de revêtements de surfaces.

11. Utilisation de la poudre fabriquée d'après le procédé selon une ou plusieurs des revendications 1 à 9 pour la réalisation de composites.

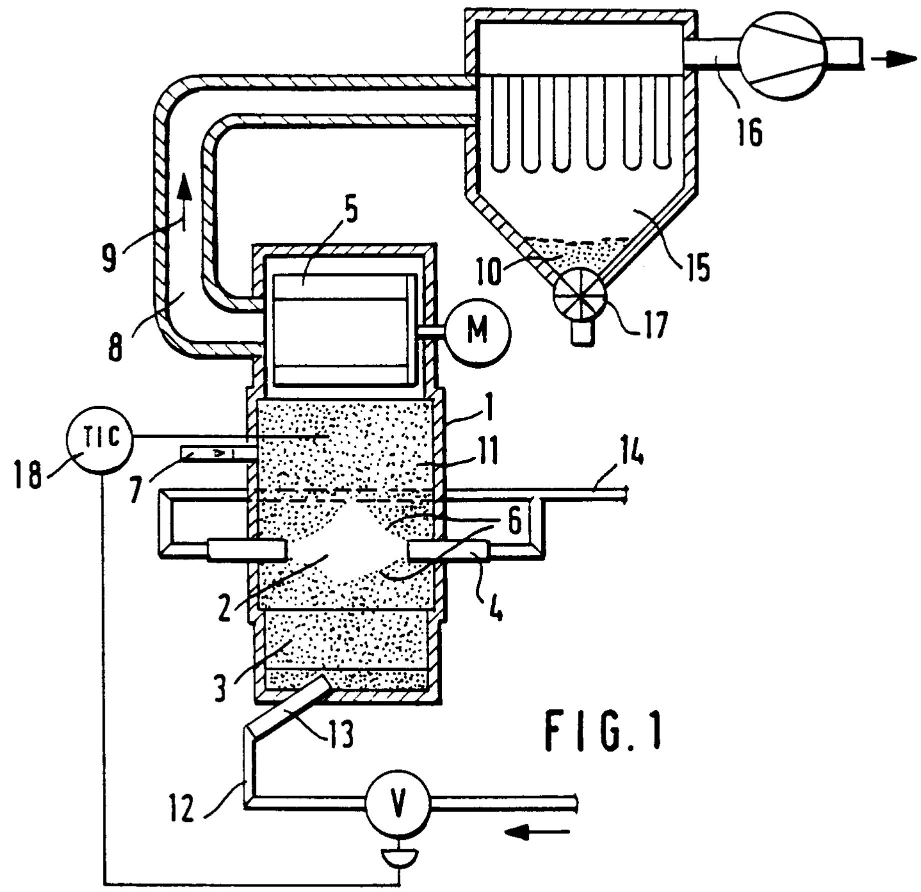


FIG.1

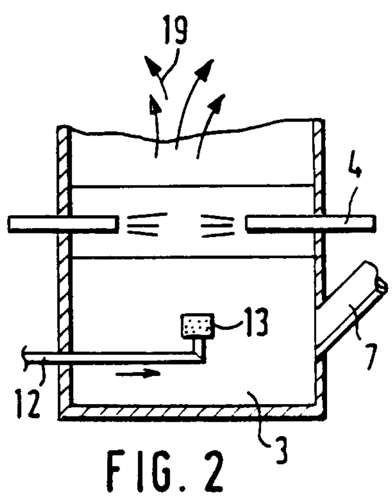


FIG.2

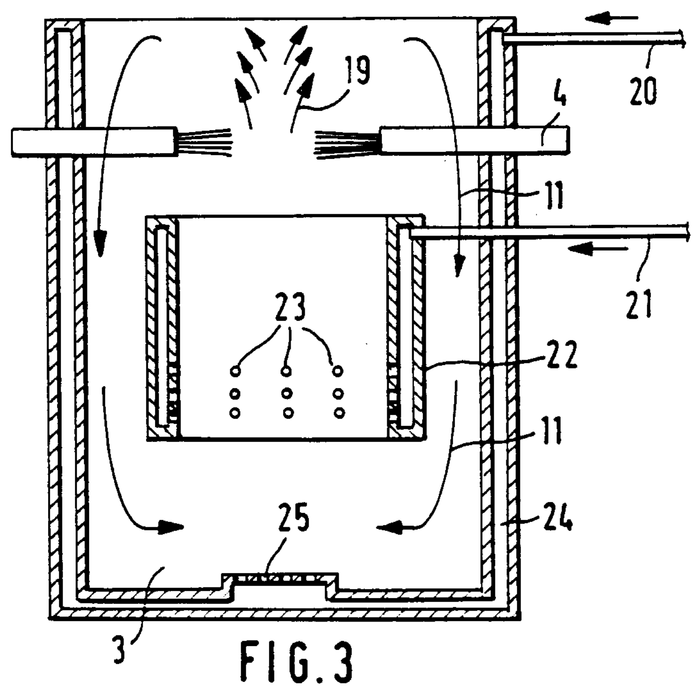


FIG.3

FIG. 4

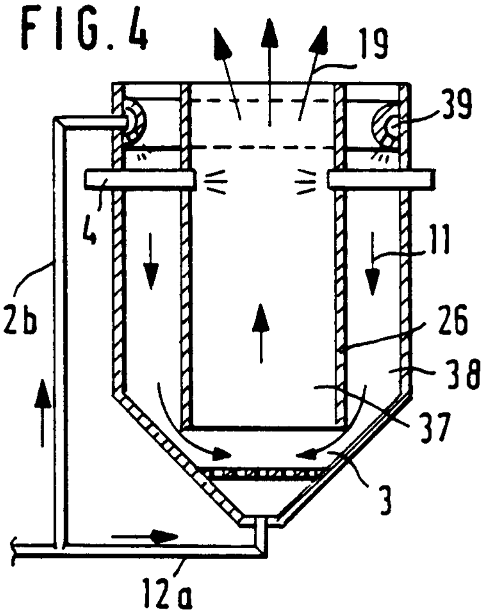


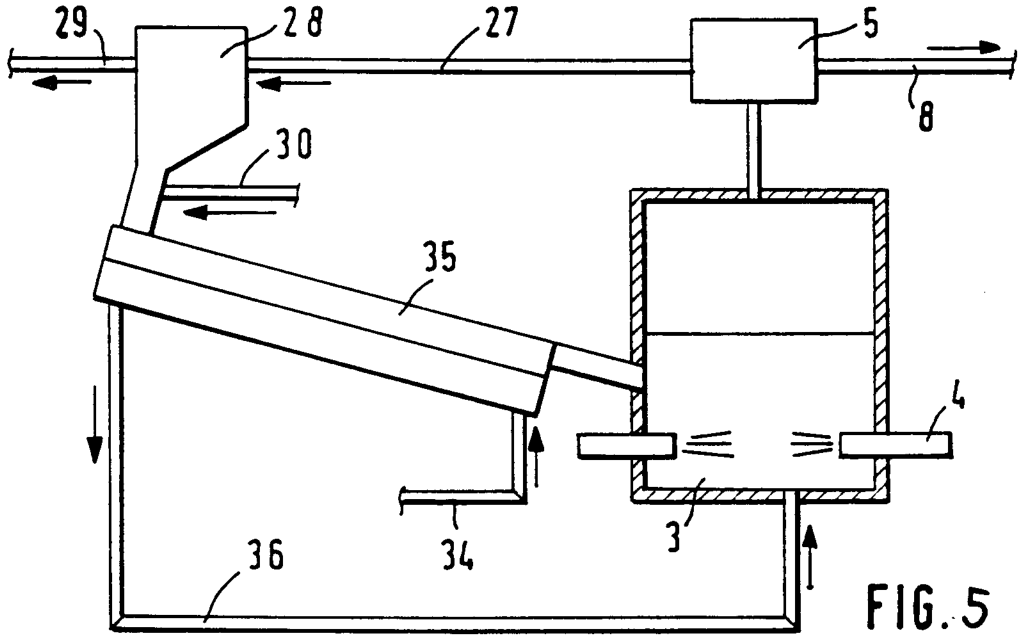


FIG. 5